# EUROPEAN PATENT SPECIFICATION

(11) **EP 2 948 667 B1**
(45) Date of publication and mention of the grant of the patent: **26.07.2017**
(21) Application number: 13815794.6
(22) Date of filing: 19.12.2013
(51) Int. Cl.: F02M 26/00

(54) **METHOD FOR OPERATING PISTON ENGINE AND PISTON ENGINE**
VERFAHREN ZUM BETRIEB EINES KOLBENMOTORS UND KOLBENMOTOR
PROCÉDÉ DE FONCTIONNEMENT DE MOTEUR À PISTON ET MOTEUR À PISTON

(30) Priority: 22.01.2013 FI 20135059
(43) Date of publication of application: 02.12.2015
(73) Proprietor: Wärtsilä Finland Oy, 65380 Vaasa (FI)
(72) Inventor: CAFARI, Alberto, I-34018 San Dorligo della Valle Trieste (IT); DELNERI, Diego, FI-65100 Vaasa (FI)
(74) Representative: Berggren Oy, Helsinki & Oulu
(86) International application number: PCT/FI2013/051187
(87) International publication number: WO 2014/114846

(56) References cited:
- EP-A1- 2 520 780
- WO-A2-2009/109694
- DE-A1-102008 015 744
- FR-A1- 2 946 388
- JP-A- 2006 132 415

## Description

### Technical field of the invention

The present invention relates to a method for operating a multi-cylinder piston engine in accordance with the preamble of claim 1. The invention also concerns a piston engine according to the preamble of the other independent claim.

### Background of the invention

Nitrogen oxide (NOx) emissions of internal combustion engines are subject to continuously tightening regulations. In general, NOx emissions can be reduced by reducing temperature in the combustion chamber. In large internal combustion engines, which are operated on gaseous fuel, so-called lean burn principle can be used for reducing NOx emissions. When the engine is operated on the lean burn principle, the mixture of air and gaseous fuel that is introduced into the cylinder contains more air than is needed for complete combustion. The excess air lowers peak temperatures in the cylinder and the NOx emissions are therefore reduced. Combustion of the lean air-fuel mixture can be initiated either by a spark plug or by injecting a small amount of liquid pilot fuel into the cylinder or into a pre-combustion chamber. WO 2009/109694 A2 shows an example of such a pre-combustion chamber for a gas engine with a pilot fuel injection means. If the pilot fuel solution is used, the pilot fuel is ignited in a conventional diesel process, providing a high-energy ignition source for the main charge. Although the lean burn process itself reduces NOx emissions, a NOx problem caused by the pilot fuel injection remains.

### Summary of the invention

An object of the present invention is to provide an improved method for operating a multi-cylinder piston engine, in which engine each cylinder is provided with a reciprocating piston and a pre-combustion chamber. The characterizing features of the method are given in the characterizing part of claim 1. Another object of the invention is to provide an improved multi-cylinder piston engine.

The characterizing features of the engine according to the invention are given in the characterizing part of the other independent claim.

The method according to the invention comprises the steps of introducing gaseous fuel into an intake duct of the engine, injecting liquid pilot fuel into the pre-combustion chamber, igniting the liquid pilot fuel by means of compression by the piston, and utilizing the combustion of the liquid pilot fuel for igniting the gaseous fuel. Exhaust gas is introduced into the pre-combustion chamber before the injection of the liquid pilot fuel.

With the method according to the invention, NOx emissions of the engine can be reduced. Because of the liquid pilot fuel injection into the pre-combustion chamber, lean mixture can be introduced into the cylinder through the intake duct. Only minor NOx emissions are thus generated in the main combustion chamber. With exhaust gas recirculation (EGR) into the pre-combustion chamber, also the NOx emissions caused by the combustion of the pilot fuel can be substantially reduced. The exhaust gas in the pre-combustion chamber delays the ignition of the pilot fuel. Homogeneous combustion phase with low NOx formation is thus enhanced. The exhaust gas also slows down the combustion process once the combustion in the pre-combustion chamber has started, which also reduces the combustion temperature and NOx formation.

The engine according to the invention comprises a reciprocating piston and pre-combustion chamber for each cylinder of the engine, means for introducing gaseous fuel into an intake duct of the engine, and means for introducing liquid pilot fuel into the pre-combustion chamber. The engine further comprises means for introducing exhaust gas into the pre-combustion chamber.

The engine according to the invention can be operated according to the lean burn principle. Since the engine comprises means for introducing liquid pilot fuel into the pre-combustion chamber, lean mixture can be introduced into the cylinder through the intake duct. Only minor NOx emissions are thus generated in the main combustion chamber. Via the exhaust gas recirculation duct exhaust gas can be introduced into the pre-combustion chamber, and also the NOx emissions caused by the combustion of the pilot fuel can thus be substantially reduced. The exhaust gas in the pre-combustion chamber delays the ignition of the pilot fuel. Homogeneous combustion phase with low NOx formation is thus enhanced. The exhaust gas also slows down the combustion process once the combustion in the pre-combustion chamber has started, which also reduces the combustion temperature and NOx formation.

According to an embodiment of the invention, in the method for operating an engine, the exhaust gas is cooled before being introduced into the pre-combustion chamber. This helps to reduce the temperature in the pre-combustion chamber and to further reduce NOx emissions. Intake air can be mixed with the exhaust gas before introducing the mixture of the exhaust gas and the intake air into the pre-combustion chamber for optimizing the air/fuel ratio in the pre-combustion chamber.

The exhaust gas can be taken from an exhaust duct upstream from the turbines of the turbochargers of the engine. The pressure of the exhaust gas needs to be raised before the exhaust gas is introduced into the pre-combustion chamber. The pressure can be increased either by means of a pump or by an EGR turbocharger.

According to an embodiment of the invention, the amount of the exhaust gas that is recirculated through the pre-combustion chamber is 0.1-3 percentage by weight of the amount of the intake air that is received by the cylinder.

According to an embodiment of the invention, the exhaust gas recirculation into the pre-combustion chamber is started 360-180 degrees of crank angle before the power stroke. According to an embodiment of the invention, the exhaust gas recirculation into the pre-combustion chamber is terminated 330-150 degrees of crank angle before the power stroke. Suitable duration for the exhaust gas recirculation into the pre-combustion chamber is 30-210 degrees of crank angle.

According to an embodiment of the invention, the exhaust gas is introduced into the pre-combustion chamber at a pressure that is 0.5-3 bar above the pressure of the intake air.

According to an embodiment of the invention, the main part of the pilot fuel injection takes place during the compression stroke 40-0 degrees of crank angle before top dead center. During the main phase of the pilot fuel injection, at least 50 % of the pilot fuel is injected. The liquid pilot fuel can be injected into the pre-combustion chamber in two phases, the first phase taking place during the compression stroke 180-40 degrees of crank angle before top dead center and the main phase taking place 40-0 degrees of crank angle before top dead center. A suitable amount of liquid pilot fuel that is injected into the pre-combustion chamber is an amount that equals 0.4-4 % of the combined energy content of the liquid pilot fuel and the gaseous fuel.

According to an embodiment of the invention, the engine is provided with means for cooling the recirculated exhaust gas before the exhaust gas is introduced into the pre-combustion chamber. This helps to reduce the temperature in the pre-combustion chamber and to further reduce NOx emissions. The engine can be provided with means for mixing intake air with the exhaust gas before the mixture of the exhaust gas and the intake air is introduced into the pre-combustion chamber. This helps to optimize the air/fuel ratio in the pre-combustion chamber.

According to an embodiment of the invention, the means for introducing exhaust gas into the pre-combustion chamber comprise an exhaust gas recirculation duct, which is in fluid communication with an exhaust duct of the engine upstream from the turbines of the turbochargers of the engine. The pressure of the exhaust gas needs to be raised before the exhaust gas is introduced into the pre-combustion chamber. The engine can be provided with a pump for increasing the pressure of the exhaust gas before the exhaust gas is introduced into the pre-combustion chamber. Alternatively, the engine can be provided with an EGR turbocharger, which is arranged in parallel with a turbocharger of the engine for increasing the pressure of the exhaust gas before the exhaust gas is introduced into the pre-combustion chamber.

The engine can comprise a camshaft-guided valve for controlling the exhaust gas recirculation into the pre-combustion chamber.

According to an embodiment of the invention, the pre-combustion chamber comprises a first chamber, into which the exhaust gas and the liquid pilot fuel is introduced, and a second chamber having smaller volume than the first chamber and extending from the first chamber towards the main combustion chamber of the cylinder, the first chamber having curved walls between the top of the chamber and the second chamber and the second chamber being asymmetrically positioned with regard to the longitudinal central axis of the first chamber. According to an embodiment of the invention, the angle between the longitudinal central axes of the first chamber and the second chamber is 10-50 degrees. With the special shape and position of the pre-combustion chamber, turbulence is created in the pre-combustion chamber, which facilitates mixing in the chamber. Together with the EGR, the NOx emissions caused by the combustion of the liquid pilot fuel are further reduced.

According to an embodiment of the invention, the second chamber is provided with a number of nozzle holes in the part facing the main combustion chamber and the second chamber is arranged so that said nozzle holes are symmetrically arranged with regard to longitudinal central axis of the main combustion chamber. This ensures effective combustion in the main combustion chamber.

According to an embodiment of the invention, the ratio between the volume of the pre-combustion chamber and the combined cross-sectional area of the nozzle holes is 290-1600 mm. According to an embodiment of the invention, the ratio between the volume of the first chamber and the cross-sectional area of the second chamber as seen in the direction of the longitudinal central axis of the second chamber is 150-700 mm. According to an embodiment of the invention, the ratio between the cross-sectional area of the second chamber as seen in the direction of the longitudinal central axis of the second chamber and the combined cross-sectional area of the nozzle holes is 1.5-2.5. With suitable dimensioning of the pre-combustion chamber and the nozzle holes, the mixing in the pre-combustion chamber and the flow rate out of the chamber can be optimized for achieving the best possible NOx reducing effect.

### Brief description of the drawings

Embodiments of the invention are described below in more detail with reference to the accompanying drawings, in which
Fig. 1 shows a cross-sectional view of a cylinder head of a piston engine,
Fig. 2 shows schematically a turbocharged piston engine, in which the cylinder head of fig.1 can be used, and
Fig. 3 shows schematically a turbocharged piston engine according to another embodiment of the invention.

### Description of embodiments of the invention

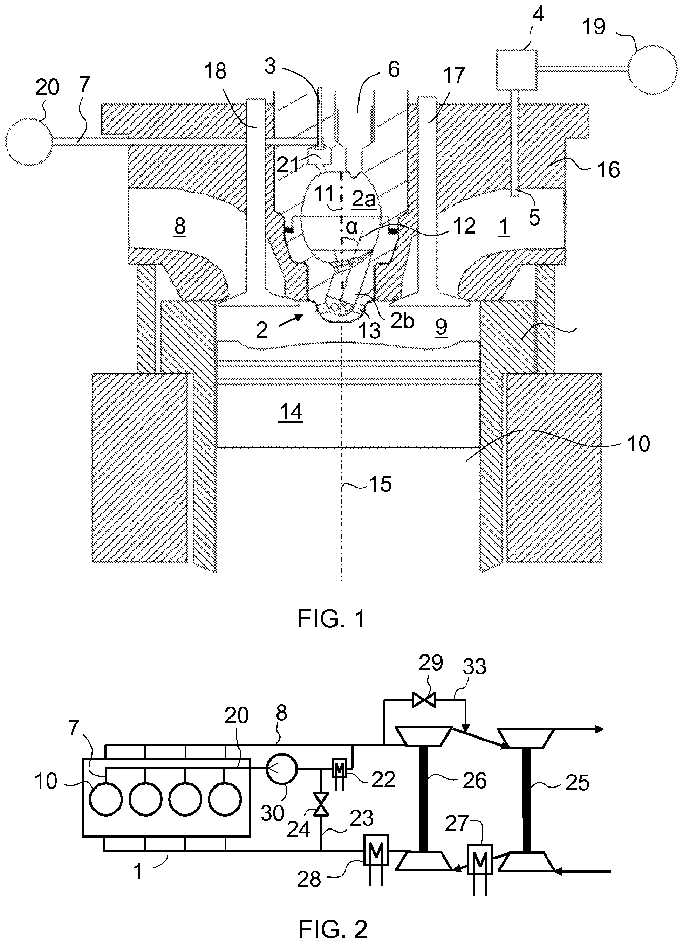

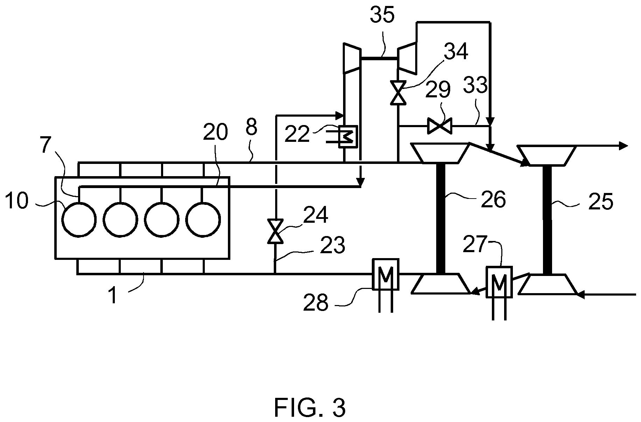

In figure 1 is shown a simplified view of a part of a cylinder 10 and a cylinder head 16 of a multi-cylinder piston engine. The engine is a large internal combustion engine, such as a main or an auxiliary engine of a ship or an engine that is used at a power plant for producing electricity. As can be seen in figures 2 and 3, the engine is provided with a low-pressure turbocharger 25 and a high-pressure turbocharger 26. A low-pressure charge air cooler 27 is arranged between the turbocharging stages, and a high-pressure charge air cooler 28 is arranged after the both turbochargers 25, 26. The engine comprises a waste gate 33 and a waste gate valve 29 for bypassing the high-pressure turbocharger 26. The engine can use gaseous fuel, such as natural gas, as the main source of energy. The engine could also be a dual-fuel engine, which can alternatively be operated on liquid fuel, such as light or heavy fuel oil. However, in the following the engine and its functioning are only described in an operation mode, in which gaseous fuel is used.

Each cylinder 10 of the engine is provided with a reciprocating piston 14. The engine is a four-stroke engine, and the operation of the engine thus comprises an intake stroke, compression stroke, power stroke and exhaust stroke. The engine is provided with an intake duct 1 and an exhaust duct 8. The intake duct 1 and the exhaust duct 8 continue outside the cylinder head 16, but in figure 1 only those sections of the intake duct 1 and the exhaust duct 8 that are inside the cylinder head 16 are shown. Each cylinder 10 of the engine is provided with at least one intake valve 17 for opening and closing fluid communication between the intake duct 1 and a main combustion chamber 9, which is delimited by the walls of the cylinder 10 and the cylinder head 16. Each cylinder 10 of the engine is also provided with at least one exhaust valve 18 for opening and closing fluid communication between the main combustion chamber 9 and the exhaust duct 8. There can also be more than one intake 17 and exhaust valves 18 for each cylinder 10. The intake and exhaust valves 17, 18 can be controlled by a conventional camshaft, or electro-hydraulic or some other means can be arranged to control the opening and closing of the gas exchange valves 17, 18. The engine also comprises means for introducing gaseous fuel into the intake duct 1. The means comprise a gas feeding duct 5 and a gas admission valve 4. Each cylinder 10 of the engine is provided with an own gas admission valve 4 and the gaseous fuel is fed into the intake duct 1 relatively close to the intake valves 17. The gaseous fuel is supplied to the gas admission valve 4 from a gas pipe 19, which is connected to a gas tank. All the gas admission valves 4 can be connected to the same gas pipe 19.

Each cylinder 10 of the engine is further provided with a pre-combustion chamber 2, which is arranged in the cylinder head 16. The pre-combustion chamber 2 comprises two main parts, which are a first chamber 2a and a second chamber 2b. The volume of the first chamber 2a is substantially larger than the volume of the second chamber 2b. The absolute values of the volumes of the first chamber 2a and the second chamber 2b depend on the diameter of the piston 14. The volume of the first chamber 2a is 2-15 times the volume of the second chamber 2b. The first chamber 2a is substantially ellipsoid-shaped. The walls of the first chamber 2a between the upper end of the first chamber 2a, i.e. the end that is farther from the main combustion chamber 9 of the cylinder 10, and the second chamber 2b are thus curved. The longitudinal central axis of the first chamber 2a is aligned with the longitudinal central axis 15 of the cylinder 10. The second chamber 2b is cylindrical. The second chamber 2b extends from the lower end of the first chamber 2a towards the combustion chamber 9. The ratio between the volume of the first chamber 2a and the cross-sectional area of the second chamber 2b, as seen in the direction of the longitudinal central axis 12 of the second chamber 2b, is 150-700 mm. The second chamber 2b is arranged asymmetrically with regard to the longitudinal central axis 11 of the first chamber 2a. The angle α between the longitudinal central axes 11, 12 of the first chamber 2a and the second chamber 2b is 10-50 degrees. The lower end of the second chamber 2b is provided with a plurality of nozzle holes 13, which are arranged symmetrically with regard to the longitudinal central axis 15 of the cylinder 10 and open into the main combustion chamber 9. The ratio between the volume of the pre-combustion chamber 2 and the combined cross-sectional area of the nozzle holes 13 is 290-1600 mm. The ratio between the cross-sectional area of the second chamber 2b, as seen in the direction of the longitudinal central axis 12 of the second chamber 2b, and the combined cross-sectional area of the nozzle holes 13 is 1.5-2.5.

The engine comprises means for injecting liquid pilot fuel into the prechamber 2. The means comprise a fuel injector 6, which is capable of injecting the fuel, such as light fuel oil at a high pressure. The injection pressure is between 500-1600 bar. The injection of the liquid pilot fuel can be based on the common-rail principle. The fuel injector 6 is arranged to inject the fuel into the first chamber 2a of the pre-combustion chamber 2. The engine is further provided with means 3, 7, 20, 30, 35 for introducing exhaust gas into the pre-combustion chamber 2. The means comprise an exhaust gas recirculation duct 7 and an EGR valve 3. The EGR valve 3 is controlled by a cam. Alternatively, an electronically controlled actuator can be used. The exhaust gas recirculation duct 7 is connected to an EGR pipe 20. The EGR pipe is in fluid communication with the exhaust duct 8 of the engine. When the EGR valve 3 is opened, exhaust gas can flow from the exhaust gas recirculation duct 7 into an EGR chamber 21, which is in fluid communication with the pre-combustion chamber 2. The engine is further provided with an air duct 23 and a valve 24, which are in the embodiment of figure 2 arranged between the EGR pipe 20 and the intake duct 1 of the engine. The air duct 23 is connected downstream from the EGR cooler 22. Through the air duct 23, intake air of the engine can be introduced into the pre-combustion chambers 2 for adjusting the air/fuel ratio in the pre-combustion chambers 2. The air duct 23 is connected to the intake duct 1 downstream from the high-pressure charge air cooler 28. In the embodiment of figure 2, the EGR pipe 20 is connected to the exhaust duct 8 upstream from both the turbine of the high-pressure turbocharger 26 and the turbine of the low-pressure turbocharger 25. An EGR cooler 22 is arranged between the exhaust duct 8 and the pre-combustion chamber 2 of the engine for cooling the exhaust gas that is introduced into the pre-combustion chamber 2. The pressure of the exhaust gas needs to be raised before the exhaust gas is introduced into the pre-combustion chamber 2. In the embodiment of figure 2, a pump 30 is arranged downstream from the EGR cooler 22 for increasing the pressure of the exhaust gas before it is introduced into the pre-combustion chamber 2.

Figure 3 shows another embodiment of the invention, in which different means are used for increasing the pressure of the exhaust gas. In the embodiment of figure 3, the engine is provided with an EGR turbocharger 35 for increasing the pressure of the recirculated exhaust gas. The turbine of the EGR turbocharger 35 is connected to the exhaust duct 8 upstream from the turbine of the high-pressure turbocharger 26 of the engine. The downstream side of the turbine of the EGR turbocharger 35 is connected to the exhaust duct between the turbines of the high-pressure turbocharger 26 and the low-pressure turbocharger 25 of the engine. The turbine of the EGR turbocharger 35 is thus connected in parallel with the turbine of the high-pressure turbocharger 26. The turbine of the EGR turbocharger 35 is also in parallel with the waste gate 33. A valve 34 is arranged between the exhaust duct 8 and the turbine of the EGR turbocharger 35. The valve 34 can be used for regulating the exhaust gas flow through the turbine of the EGR turbocharger 35 to regulate the exhaust gas flow into the pre-combustion chamber 2. Exhaust gas can be introduced from the exhaust duct 8 into the compressor of the EGR turbocharger 35 and from the compressor into the EGR pipe 20. In the embodiment of figure 3, the EGR cooler 22 is arranged upstream from the compressor of the EGR turbocharger 35. The air duct 23 and the valve 24 are arranged between the intake duct 1 and the turbine of the EGR turbocharger 35 downstream from the EGR cooler 22.

The operation of the engine is described below. The engine is operated on gaseous fuel. The gaseous fuel is introduced into the intake duct 1 of the engine by means of the gas feeding duct 5 and the gas admission valve 4. The engine is operated on the so called lean burn principle, and a lean mixture of intake air and fuel is thus introduced into the cylinder 10 via the intake duct 1. The amount of air in the cylinder 10 during the combustion is larger than the amount that is needed for complete combustion. The air/fuel ratio is approximately twice the air/fuel ratio of a stoichiometric mixture. Because of the excess air, peak temperatures in the cylinder 10 are lowered and NOx emissions are reduced. The gas feeding starts at the beginning of the intake stroke. As the piston 14 moves downwards towards bottom dead center during the intake stroke, mixture of gaseous fuel and intake air flows into the cylinder 10. Mixing of the gaseous fuel and the intake air starts already in the intake duct 1 and continues in the cylinder 10 during the intake stroke and the compression stroke. During the compression stroke, part of the mixture in the cylinder 10 flows through the nozzle holes 13 of the pre-combustion chamber 2 into the pre-combustion chamber 2.

For igniting the lean mixture that has been introduced into the cylinder 10, liquid pilot fuel, such as light fuel oil is injected into the pre-combustion chamber 2 through the fuel injector 6. The injection of the liquid pilot fuel takes place during the compression stroke. Main part of the liquid pilot fuel, i.e. at least 50 %, is injected 40-0 degrees of crank angle before top dead center. However, the liquid pilot fuel can also be injected into the pre-combustion chamber 2 in two phases, in which case the initial phase takes place 180-40 degrees of crank angle before top dead center. During the initial phase at most 50 % of the liquid pilot fuel is injected into the pre-combustion chamber 2. The amount of the fuel injected during the initial phase can vary between 0 and 50 % of the total amount of the liquid pilot fuel. The total amount of the liquid pilot fuel equals 0.4-4 % of the combined energy content of the liquid and gaseous fuel that is introduced into the cylinder 10. The liquid pilot fuel is ignited by means of the compression by the piston 14. When the temperature in the pre-combustion chamber 2 is high enough at the end of the compression stroke, the liquid pilot fuel is ignited. The combustion of the liquid pilot fuel initiates the combustion of the gaseous fuel. When the combustion starts, the mixture flows out of the pre-combustion chamber 2 into the main combustion chamber 9 of the cylinder 10, where the rest of the lean mixture is ignited.

Main part of the NOx emissions are generated in the pre-combustion chamber 2, where a richer mixture is present than in the main combustion chamber 9. For reducing the NOx emissions, exhaust gas is introduced into the pre-combustion chamber 2. This exhaust gas recirculation delays the ignition of the liquid pilot fuel and allows better mixing in the pre-combustion chamber 2. Also the combustion in the pre-combustion chamber 2 slows down because of the exhaust gas recirculation, which also helps to lower the peak temperatures and NOx emissions. The shape and dimensioning of the pre-combustion chamber 2 facilitates the mixing of the liquid pilot fuel and the lean mixture that flows into the pre-combustion chamber 2 during the compression stroke. This further reduces the NOx emissions. The shape and dimensioning of the pre-combustion chamber 2 also help the main part of the recirculated exhaust gas to stay in the pre-combustion chamber 2 until the combustion starts. The exhaust gas recirculation can be started between 360 to 180 degrees before the power stroke, i.e. during the intake stroke. The duration of the exhaust gas recirculation is chosen so that the amount of the recirculated exhaust gas is 0.1-3 percentage by weight of the amount of the intake air that is received by the cylinder 10. Suitable duration for the exhaust gas recirculation is 30-210 degrees of crank angle and the exhaust gas recirculation into the pre-combustion chamber is terminated 330-150 degrees before the power stroke. For adjusting the air/fuel ratio in the pre-combustion chamber 2, intake air can be guided through the air duct 23 from the intake duct 1 of the engine into the exhaust gas recirculation duct 7 and further into the pre-combustion chamber 2.

It will be appreciated by a person skilled in the art that the invention is not limited to the embodiments described above, but may vary within the scope of the appended claims.

## Claims

1. A method for operating a multi-cylinder piston engine, in which engine each cylinder (10) is provided with a reciprocating piston (14) and a pre-combustion chamber (2), the method comprising the steps of introducing gaseous fuel into an intake duct (1) of the engine, injecting liquid pilot fuel into the pre-combustion chamber (2), igniting the liquid pilot fuel by means of compression by the piston (14), and utilizing the combustion of the liquid pilot fuel for igniting the gaseous fuel, **characterized in that** exhaust gas is introduced into the pre-combustion chamber (2) before the injection of the liquid pilot fuel.

2. A method according to claim 1, **characterized in that** the exhaust gas is cooled before being introduced into the pre-combustion chamber (2).

3. A method according to claim 1 or 2, **characterized in that** intake air is mixed with the exhaust gas before introducing the mixture of the exhaust gas and the intake air into the pre-combustion chamber (2).

4. A method according to any of claims 1-3, **characterized in that** the exhaust gas is taken from an exhaust duct (8) upstream from the turbines of the turbochargers (25, 26) of the engine.

5. A method according to any of the preceding claims, **characterized in that** the pressure of the exhaust gas is increased by means of a pump (30) before the exhaust gas is introduced into the pre-combustion chamber (2).

6. A method according to any of claims 1-4, **characterized in that** the pressure of the exhaust gas is increased by means of an EGR turbocharger (35) before the exhaust gas is introduced into the pre-combustion chamber (2).

7. A method according to any of the preceding claims, **characterized in that** the amount of the exhaust gas that is recirculated through the pre-combustion chamber (2) is 0.1-3 percentage by weight of the amount of the intake air that is received by the cylinder (10).

8. A method according to any of the preceding claims, **characterized in that** the exhaust gas recirculation into the pre-combustion chamber (2) is started 360-180 degrees of crank angle before the power stroke.

9. A method according to claim 8, **characterized in that** the exhaust gas recirculation into the pre-combustion chamber (2) is terminated 330-150 degrees of crank angle before the power stroke.

10. A method according to any of the preceding claims, **characterized in that** the duration of the exhaust gas recirculation into the pre-combustion chamber (2) is 30-210 degrees of crank angle.

11. A method according to any of the preceding claims, **characterized in that** the exhaust gas is introduced into the pre-combustion chamber (2) at a pressure that is 0.5-3 bar above the pressure of the intake air.

12. A method according to any of the preceding claims, **characterized in that** the main part of the pilot fuel injection takes place during the compression stroke 40-0 degrees of crank angle before top dead center.

13. A method according to claim 12, **characterized in that** at least 50 % of the pilot fuel is injected during the compression stroke 40-0 degrees of crank angle before top dead center.

14. A method according to claim 12 or 13, **characterized in that** the liquid pilot fuel is injected into the pre-combustion chamber (2) in two phases, the first phase taking place during the compression stroke 180-40 degrees of crank angle before top dead center and the main phase taking place during the compression stroke 40-0 degrees of crank angle before top dead center.

15. A method according to any of the preceding claims, **characterized in that** the amount of the liquid pilot fuel that is injected into the pre-combustion chamber (2) equals 0.4-4 % of the combined energy content of the liquid pilot fuel and the gaseous fuel.

16. A multi-cylinder piston engine comprising a reciprocating piston (14) and pre-combustion chamber (2) for each cylinder (10) of the engine, means (4, 5) for introducing gaseous fuel into an intake duct (1) of the engine, and means (6) for introducing liquid pilot fuel into the pre-combustion chamber (2), **characterized in that** the engine comprises means (3, 7, 20, 30, 35) for introducing exhaust gas into the pre-combustion chamber (2).

17. An engine according to claim 16, **characterized in that** the engine is provided with means (22) for cooling the recirculated exhaust gas before the exhaust gas is introduced into the pre-combustion chamber (2).

18. An engine according to claim 16 or 17, **characterized in that** the means (3, 7, 20, 30, 35) for introducing exhaust gas into the pre-combustion chamber (2) comprise an exhaust gas recirculation duct (7), which is in fluid communication with an exhaust duct (8) of the engine upstream from the turbines of the turbochargers (25, 26) of the engine.

19. An engine according to any of claims 16-18, **characterized in that** the engine is provided with a pump (30) for increasing the pressure of the exhaust gas before the exhaust gas is introduced into the pre-combustion chamber (2).

20. An engine according to any of claims 16-18, **characterized in that** the engine is provided with an EGR turbocharger (35), which is arranged in parallel with a turbocharger (26, 27) of the engine for increasing the pressure of the exhaust gas before the exhaust gas is introduced into the pre-combustion chamber (2).

21. An engine according to any of claims 16-20, **characterized in that** the engine is provided with means (23, 24) for mixing intake air with the exhaust gas before the mixture of the exhaust gas and the intake air is introduced into the pre-combustion chamber (2).

22. An engine according to any of claims 16-21, **characterized in that** the engine comprises a camshaft-guided valve (3) for controlling the exhaust gas recirculation into the pre-combustion chamber (2).

23. An engine according to any of claims 16-22, **characterized in that** the pre-combustion chamber (2) comprises a first chamber (2a), into which the exhaust gas and the liquid pilot fuel is introduced, and a second chamber (2b) having smaller volume than the first chamber (2a) and extending from the first chamber (2a) towards the main combustion chamber (9) of the cylinder (10), the first chamber (2a) having curved walls between the top of the chamber (2a) and the second chamber (2b) and the second chamber (2b) being asymmetrically positioned with regard to the longitudinal central axis (11) of the first chamber (2a).

24. An engine according to claim 23, **characterized in that** the angle (a) between the longitudinal central axes (11, 12) of the first chamber (2a) and the second chamber (2b) is 10-50 degrees.

25. An engine according to claim 23 or 24, **characterized in that** the second chamber (2b) is provided with a number of nozzle holes (13) in the part facing the main combustion chamber (9) and the second chamber (2b) is arranged so that said nozzle holes (13) are symmetrically arranged with regard to the longitudinal central axis (15) of the main combustion chamber (9).

26. An engine according to claim 25, **characterized in that** the ratio between the volume of the pre-combustion chamber (2) and the combined cross-sectional area of the nozzle holes (13) is 290-1600 mm.

27. An engine according to any of claims 23-26, **characterized in that** the ratio between the volume of the first chamber (2a) and the cross-sectional area of the second chamber (2b) as seen in the direction of the longitudinal central axis (12) of the second chamber (2b) is 150-700 mm.

28. An engine according to any of claims 23-27, **characterized in that** the ratio between the cross-sectional area of the second chamber (2b) as seen in the direction of the longitudinal central axis (12) of the second chamber (2b) and the combined cross-sectional area of the nozzle holes (13) is 1.5-2.5.

## Patentansprüche

1. Verfahren zum Betreiben eines Mehrzylinderkolbenmotors, wobei in dem Motor jeder Zylinder (10) mit einem Hubkolben (14) und einer Vorverbrennungskammer (2) versehen ist und das Verfahren die Schritte des Einführens von gasförmigem Kraftstoff in einen Ansaugkanal (1) des Motors, Einspritzen von flüssigem Pilotkraftstoff in die Vorverbrennungskammer (2), Zünden des flüssigen Pilotkraftstoffs mittels Verdichtung durch den Kolben (14) und Nutzen der Verbrennung des flüssigen Pilotkraftstoffs, um den gasförmigen Kraftstoff zu entzünden, aufweist, **dadurch gekennzeichnet, dass** das Abgas vor dem Einspritzen des flüssigen Pilotkraftstoffs in die Vorverbrennungskammer (2) eingeführt wird.

2. Verfahren nach Anspruch 1, **dadurch gekennzeichnet, dass** das Abgas abgekühlt wird, bevor es in die Vorverbrennungskammer (2) eingeführt wird.

3. Verfahren nach Anspruch 1 oder 2, **dadurch gekennzeichnet, dass** die Ansaugluft mit dem Abgas vor dem Einführen der Mischung aus dem Abgas und der Ansaugluft in die Vorverbrennungskammer (2) gemischt wird.

4. Verfahren nach einem der Ansprüche 1 - 3, **dadurch gekennzeichnet, dass** das Abgas von einem Abgaskanal (8) vor den Turbinen des Turboladers (25, 26) des Motors genommen wird.

5. Verfahren nach einem der vorstehenden Ansprüche, **dadurch gekennzeichnet, dass** der Druck des Abgases mittels einer Pumpe (30) erhöht wird, bevor das Abgas in die Vorverbrennungskammer (2) eingeführt wird.

6. Verfahren nach einem der Ansprüche 1 - 4, **dadurch gekennzeichnet, dass** der Druck des Abgases mittels eines EGR-Turboladers (35) erhöht wird, bevor das Abgas in die Vorverbrennungskammer (2) eingeführt wird.

7. Verfahren nach einem der vorstehenden Ansprüche, **dadurch gekennzeichnet, dass** die Menge des Abgases, das durch die Vorverbrennungskammer (2) zurückgeführt wird, 0,1 - 3 Gewichtsprozent der Menge der Ansaugluft beträgt, die durch den Zylinder (10) aufgenommen wird.

8. Verfahren nach einem der vorstehenden Ansprüche, **dadurch gekennzeichnet, dass** die Abgasrückführung in die Vorverbrennungskammer (2) 360 - 180 Grad des Kurbelwinkels vor dem Arbeitshub begonnen wird.

9. Verfahren nach Anspruch 8, **dadurch gekennzeichnet, dass** die Abgasrückführung in die Vorverbrennungskammer (2) 330 - 150 Grad des Kurbelwinkels vor dem Arbeitshub beendet wird.

10. Verfahren nach einem der vorstehenden Ansprüche, **dadurch gekennzeichnet, dass** die Dauer der Abgasrückführung in die Vorverbrennungskammer (2) 30 - 210 Grad des Kurbelwinkels beträgt.

11. Verfahren nach einem der vorstehenden Ansprüche **dadurch gekennzeichnet, dass** das Abgas in die Vorverbrennungskammer (2) mit einem Druck eingeführt wird, der 0,5 - 3 Bar über dem Druck der Ansaugluft liegt.

12. Verfahren nach einem der vorstehenden Ansprüche, **dadurch gekennzeichnet, dass** der Hauptteil der Pilotkraftstoffeinspritzung während des Kompressionshubs 40 - 0 Grad des Kurbelwinkels vor dem oberen Totpunkt erfolgt.

13. Verfahren nach Anspruch 12, **dadurch gekennzeichnet, dass** mindestens 50 % des Pilotkraftstoffs während des Kompressionshubs 40 - 0 Grad des Kurbelwinkels vor dem oberen Totpunkt eingespritzt wird.

14. Verfahren nach Anspruch 12 oder 13, **dadurch gekennzeichnet, dass** der flüssige Pilotkraftstoff in die Vorverbrennungskammer (2) in zwei Phasen eingespritzt wird, wobei die erste Phase während des Kompressionshubs 180 - 40 Grad des Kurbelwinkels vor dem oberen Totpunkt erfolgt und die Hauptphase während des Kompressionshubs 40 - 0 Grad des Kurbelwinkels vor dem oberen Totpunkt erfolgt.

15. Verfahren nach einem der vorstehenden Ansprüche, **dadurch gekennzeichnet, dass** die Menge an flüssigem Pilotkraftstoff, der in die Vorverbrennungskammer (2) eingespritzt wird, gleich 0,4 - 4 % des kombinierten Energieinhalts des flüssigen Pilotkraftstoffs und des gasförmigen Kraftstoffs ist.

16. Mehrzylinderkolbenmotor, umfassend einen Hubkolben (14) und eine Vorverbrennungskammer (2) für jeden Zylinder (10) des Motors, Mittel (4, 5) zum Einführen von gasförmigem Kraftstoff in einen Ansaugkanal (1) des Motors und Mittel (6) zum Einführen von flüssigem Pilotkraftstoff in die Vorverbrennungskammer (2), **dadurch gekennzeichnet, dass** der Motor Mittel (3, 7, 20, 30, 35) zum Einführen von Abgas in die Vorverbrennungskammer (2) aufweist.

17. Motor nach Anspruch 16, **dadurch gekennzeichnet, dass** der Motor mit Mitteln (22) zum Kühlen des zurückgeführten Abgases versehen ist, bevor das Abgas in die Vorverbrennungskammer (2) eingeführt wird.

18. Motor nach Anspruch 16 oder 17, **dadurch gekennzeichnet, dass** die Mittel (3, 7, 20, 30, 35) zum Einführen von Abgas in die Vorverbrennungskammer (2) einen Abgasrückführungskanal (7) umfassen, der in Fluidverbindung mit einem Abgaskanal (8) des Motors vor den Turbinen der Turbolader (25, 26) des Motors ist.

19. Motor nach einem der Ansprüche 16 - 18, **dadurch gekennzeichnet, dass** der Motor mit einer Pumpe (30) versehen ist, um den Druck des Abgases zu erhöhen, bevor das Abgas in die Vorverbrennungskammer (2) eingeführt wird.

20. Motor nach einem der Ansprüche 16 - 18, **dadurch gekennzeichnet, dass** der Motor mit einem EGR-Turbolader (35) versehen ist, der mit einem Turbolader (26, 27) des Motors parallel angeordnet ist, um den Druck des Abgases zu erhöhen, bevor das Abgas in die Vorverbrennungskammer (2) eingeführt wird.

21. Motor nach einem der Ansprüche 16 - 20, **dadurch gekennzeichnet, dass** der Motor mit Mitteln (23, 24) versehen ist, um Ansaugluft mit dem Abgas zu mischen, bevor die Mischung aus Abgas und Ansaugluft in die Vorverbrennungskammer (2) eingeführt wird.

22. Motor nach einem der Ansprüche 16 - 21, **dadurch gekennzeichnet, dass** der Motor ein nockenwellengeführtes Ventil (3) zum Steuern der Abgasrückführung in die Vorverbrennungskammer (2) umfasst.

23. Motor nach einem der Ansprüche 16 - 22, **dadurch gekennzeichnet, dass** die Vorverbrennungskammer (2) eine erste Kammer (2a), in die das Abgas und der flüssige Pilotkraftstoff eingeführt werden, und eine zweite Kammer (2b) mit kleinerem Volumen als die erste Kammer (2a), die sich von der ersten Kammer (2a) zur Hauptbrennkammer (9) des Zylinders (10) erstreckt, umfasst, wobei die erste Kammer (2a) gekrümmte Wände zwischen der Oberseite der Kammer (2a) und der zweiten Kammer (2b) aufweist und die zweite Kammer (2b) in Bezug auf die Längsmittelachse (11) von der ersten Kammer (2a) positioniert ist.

24. Motor nach Anspruch 23, **dadurch gekennzeichnet, dass** der Winkel (a) zwischen den Längsmittelachsen (11, 12) von der ersten Kammer (2a) und der zweiten Kammer (2b) 10 - 50 Grad beträgt.

25. Motor nach Anspruch 23 oder 24, **dadurch gekennzeichnet, dass** die zweite Kammer (2b) mit einer Anzahl von Düsenbohrungen (13) in dem Teil, welcher der Hauptbrennkammer (9) zugewandt ist, versehen ist und die zweite Kammer (2b) derart angeordnet ist, dass die Düsenbohrungen (13) in Bezug auf die Längsmittelachse (15) der Hauptbrennkammer (9) symmetrisch angeordnet sind.

26. Motor nach Anspruch 25, **dadurch gekennzeichnet, dass** das Verhältnis zwischen dem Volumen der Vorverbrennungskammer (2) und der kombinierten Querschnittsfläche der Düsenbohrungen (13) 290 - 1600 mm beträgt.

27. Motor nach einem der Ansprüche 23 - 26, **dadurch gekennzeichnet, dass** das Verhältnis zwischen dem Volumen von der ersten Kammer (2a) und der Querschnittsfläche der zweiten Kammer (2b) in Richtung der Längsmittelachse (12) der zweiten Kammer (2b) gesehen 150 - 700 mm beträgt.

28. Motor nach einem der Ansprüche 23 - 27, **dadurch gekennzeichnet, dass** das Verhältnis zwischen der Querschnittsfläche der zweiten Kammer (2b) in Richtung der Längsmittelachse (12) der zweiten Kammer (2b) gesehen und der kombinierten Querschnittsfläche der Düsenbohrungen (13) 1,5 - 2,5 beträgt.

## Revendications

1. Procédé de fonctionnement d'un moteur à pistons multicylindre, chaque cylindre (10) dudit moteur étant pourvu d'un piston alternatif (14) et d'une chambre de précombustion (2), le procédé comprend les étapes d'introduction d'un combustible gazeux dans un conduit d'admission (1) du moteur, d'injection d'un carburant pilote liquide dans la chambre de précombustion (2), d'allumage du carburant pilote liquide au moyen de la compression par le piston (14), et d'utilisation de la combustion du carburant pilote liquide pour allumer le carburant gazeux, **caractérisé en ce que** des gaz d'échappement sont introduits dans la chambre de précombustion (2) avant l'injection du carburant pilote liquide.

2. Procédé selon la revendication 1, **caractérisé en ce que** les gaz d'échappement sont refroidis avant d'être introduits dans la chambre de précombustion (2).

3. Procédé selon la revendication 1 ou 2, **caractérisé en ce que** l'air d'admission est mélangé aux gaz d'échappement avant d'introduire le mélange des gaz d'échappement et de l'air d'admission dans la chambre de précombustion (2).

4. Procédé selon l'une quelconque des revendications 1 - 3, **caractérisé en ce que** les gaz d'échappement sont prélevés dans un conduit d'échappement (8) en amont des turbines des turbocompresseurs (25, 26) du moteur.

5. Procédé selon l'une quelconque des revendications précédentes, **caractérisé en ce que** la pression des gaz d'échappement est augmentée à l'aide d'une pompe (30) avant que les gaz d'échappement ne soient introduits dans la chambre de précombustion (2).

6. Procédé selon l'une quelconque des revendications 1 - 4, **caractérisé en ce que** la pression des gaz d'échappement est augmentée à l'aide d'un turbocompresseur de recirculation des gaz d'échappement RGE (35) avant que les gaz d'échappement soient introduits dans la chambre de précombustion (2).

7. Procédé selon l'une quelconque des revendications précédentes, **caractérisé en ce que** la quantité de gaz d'échappement recirculée via la chambre de précombustion (2) est de 0,1 % - 3 % en masse de la quantité d'air d'admission reçue par le cylindre (10).

8. Procédé selon l'une quelconque des revendications précédentes, **caractérisé en ce que** la recirculation des gaz d'échappement dans la chambre de précombustion (2) est démarrée à un angle de vilebrequin de 360° - 180° avant l'impulsion de puissance.

9. Procédé selon la revendication 8, **caractérisé en ce que** la recirculation des gaz d'échappement dans la chambre de précombustion (2) est arrêtée à un angle de vilebrequin de 330° - 150° avant l'impulsion de puissance.

10. Procédé selon l'une quelconque des revendications précédentes, **caractérisé en ce que** la durée de la recirculation des gaz d'échappement dans la chambre de précombustion (2) s'étend entre 30° et 210° d'angle de vilebrequin.

11. Procédé selon l'une quelconque des revendications précédentes, **caractérisé en ce que** les gaz d'échappement sont introduits dans la chambre de précombustion (2) à une pression supérieure de 0,5 et 3 bar à la pression de l'air d'admission.

12. Procédé selon l'une quelconque des revendications précédentes, **caractérisé en ce que** la partie principale de l'injection de carburant pilote a lieu durant l'impulsion de compression correspondant à un angle de vilebrequin de 40° - 0° avant le point mort haut.

13. Procédé selon la revendication 12, **caractérisé en ce qu'**au moins 50 % du carburant pilote est injecté durant l'impulsion de compression correspondant à un angle de vilebrequin de 40° - 0° avant le point mort haut.

14. Procédé selon la revendication 12 ou 13, **caractérisé en ce que** le carburant pilote liquide est injecté dans la chambre de précombustion (2) en deux phases, la première phase ayant lieu durant l'impulsion de compression à un angle de vilebrequin de 180° - 40° avant le point mort haut, et la phase principale ayant lieu durant l'impulsion de compression à un angle de vilebrequin de 40° - 0° avant le point mort haut.

15. Procédé selon l'une quelconque des revendications précédentes, **caractérisé en ce que** la quantité de carburant pilote liquide qui est injectée dans la chambre de précombustion (2) correspond à entre 0,4 % et 4 % du contenu énergétique combiné du carburant pilote liquide et du carburant gazeux.

16. Moteur à pistons multicylindre comprenant un piston alternatif (14) et une chambre de précombustion (2) pour chaque cylindre (10) du moteur, un moyen (4, 5) d'introduction de combustible gazeux dans un conduit d'admission (1) du moteur, et un moyen (6) d'introduction de carburant pilote liquide dans la chambre de précombustion (2), **caractérisé en ce que** le moteur comprend un moyen (3, 7, 20, 30, 35) pour introduire des gaz d'échappement dans la chambre de précombustion (2).

17. Moteur selon la revendication 16, **caractérisé en ce que** le moteur comporte un moyen (22) pour refroidir les gaz d'échappement recirculés avant que les gaz d'échappement soient introduits dans la chambre de précombustion (2).

18. Moteur selon la revendication 16 ou 17, **caractérisé en ce que** le moyen (3, 7, 20, 30, 35) pour introduire des gaz d'échappement dans la chambre de précombustion (2) comprend un conduit de recirculation des gaz d'échappement (7), qui est en communication fluidique avec un conduit d'échappement (8) du moteur en amont des turbines des turbocompresseurs (25, 26) du moteur.

19. Moteur selon l'une quelconque des revendications 16 - 18, **caractérisé en ce que** le moteur est pourvu d'une pompe (30) pour augmenter la pression des gaz d'échappement avant que les gaz d'échappement soient introduits dans la chambre de précombustion (2).

20. Moteur selon l'une quelconque des revendications 16 - 18, **caractérisé en ce que** le moteur est pourvu d'un turbocompresseur RGE (35), qui est agencé en parallèle avec le turbocompresseur (26, 27) du moteur pour augmenter la pression des gaz d'échappement avant que les gaz d'échappement soient introduits dans la chambre de précombustion (2).

21. Moteur selon l'une quelconque des revendications 16 - 20, **caractérisé en ce que** le moteur est pourvu d'un moyen (23, 24) pour mélanger l'air d'admission avec les gaz d'échappement avant que le mélange des gaz d'échappement et de l'air d'admission soit introduit dans la chambre de précombustion (2).

22. Moteur selon l'une quelconque des revendications 16 - 21, **caractérisé en ce que** le moteur comprend une vanne commandée par arbre à came (3) pour contrôler la recirculation des gaz d'échappement dans la chambre de précombustion (2).

23. Moteur selon l'une quelconque des revendications 16 - 22, **caractérisé en ce que** la chambre de précombustion (2) comprend une première chambre (2a) dans laquelle les gaz d'échappement et le carburant pilote liquide sont introduits, et une deuxième chambre (2b) ayant un volume inférieur à celui de la première chambre (2a) et s'étendant depuis la première chambre (2a) vers la chambre de combustion principale (9) du cylindre (10), la première chambre (2a) ayant des parois incurvées entre le dessus de la chambre (2a) et la deuxième chambre (2b), et la deuxième chambre (2b) étant positionnée asymétriquement par rapport à l'axe central longitudinal (11) de la première chambre (2a).

24. Moteur selon la revendication 23, **caractérisé en ce que** l'angle (α) entre les axes centraux longitudinaux (11, 12) de la première chambre (2a) et de la deuxième chambre (2b) est de 10° - 50°.

25. Moteur selon la revendication 23 ou 24, **caractérisé en ce que** la deuxième chambre (2b) est pourvue d'un certain nombre de trous de buse (13) dans la partie qui fait face à la chambre de combustion principale (9) et **en ce que** la deuxième chambre (2b) est agencée de telle manière que lesdits trous de buse (13) sont agencés symétriquement par rapport à l'axe central longitudinal (15) de la chambre de combustion principale (9).

26. Moteur selon la revendication 25, **caractérisé en ce que** le rapport entre le volume de la chambre de précombustion (2) et la surface en section transversale combinée des trous de buse (13) est compris entre 290 mm et 1600 mm.

27. Moteur selon l'une quelconque des revendications 23 à 26, **caractérisé en ce que** le rapport entre le volume de la première chambre (2a) et la surface en section transversale de la deuxième chambre (2b) vue en direction de l'axe central longitudinal (12) de la deuxième chambre (2b) est compris entre 150 mm et 700 mm.

28. Moteur selon l'une quelconque des revendications 23 à 27, **caractérisé en ce que** le rapport entre la surface en section transversale de la deuxième chambre (2b) vue en direction de l'axe central longitudinal (12) de la deuxième chambre (2b) et la surface en section transversale combinée des trous de buse (13) est compris entre 1,5 et 2,5.
